# EUROPEAN PATENT APPLICATION

(11) **EP 4 687 032 A1**
(43) Date of publication of application: **04.02.2026**
(21) Application number: 24192617.9
(22) Date of filing: 02.08.2024
(51) Int. Cl.: G06F 8/77, G06F 11/3604, G05B 19/00, G06F 8/70, G06F 8/71, G06F 11/3668

(54) **A METHOD FOR A QUALITY LEVEL DETERMINATION OF AN APPLICATION FILE IN AN AUTOMATION SYSTEM**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

The invention relates to a method for a quality level determination of an application file (App, AD) for an automation component (AC, DMS) of an automation system (AS). The method comprises the following steps: determining quality metrics of the application file (App, AD) for the automation component (AC, DMS) of the automation system (AS), evaluating the determined quality metrics based on predefined criteria, and determining a quality level of the application file (App, AD) based on the evaluation result. The invention further relates to a corresponding automation component (AC, DMS) and an automation system (AS) with such an automation component (AC, DMS).

## Description

The present invention relates to a method for a quality level determination of an application file for an automation component of an automation system. Moreover, the invention relates to an automation component of an automation system and to an automation system comprising at least a first and a second automation component. Further, the invention relates to a computer program product comprising a program code for executing such a method.

Due to increasing networking in industrial applications and the need to process larger amounts of data locally to optimize manufacturing processes, industrial devices are becoming increasingly flexible in terms of their functionality. This is made possible in particular using reloadable applications, with which the device functionality can also be adapted quickly and easily in the field. This is the case for example in automation systems which can comprise a plurality of different components or devices which can then be easily adapted and/or extended in their functionalities due to such applications.

As the customer, e.g., the operator of such automation systems, should be offered the widest possible range of reloadable applications (also called apps), a broad range of applications should be available. As a result, the applications can, for example, come from different manufacturers, integrators, or app providers (e.g., may be provided by the operator, the integrator, or by or any other third-party provider), can adopt different formats (e.g. Docker containers, Debian packages, simple tar archive, bytecode, etc.) and can require different levels of integration with the system (e.g. limited permissions, very invasive permissions, etc.).

It should be noted that independent of the grammatical term usage, individuals with male, female or other gender identities are included within the term.

Thus, individual applications or constellations (i.e., combinations) of several applications can be provided by different participants or stakeholders of an automation scenario (e.g., device/component manufacturer, integrator, operator of the automation system, third party application provider, etc.) and can be sent to an automation device for execution (so called application deployment). However, such an application deployment, i.e., installation and execution of the corresponding application(s) included in an application deployment file on a device/component of the automation system, can become very complex due to the multiple stakeholders involved and can also vary greatly in terms of the quality of the applications and/or application constellations. When errors or problems (e.g., functional, instability, security incidents, etc.) occur in an automation system, this variety of the integrated and used applications can make it difficult to identify the cause of such errors or problems.

It is known to use a runtime health check functionality to generally check the integrity of critical system resources (e.g. files, processes, read-only memory areas of a PLC) at runtime. This functionality can be implemented as an independent process on a device (health check agent) or as a task on a real-time operating system. The check is carried out by comparing the checked system resources with a monitoring policy (e.g., OEM policy, operator policy). A rule set can define, for example, how to react to detected deviations (e.g., setting a switching signal, sending a log message, etc.).

Further, remote attestation is generally known, whereby a participant/peer is provided with information about a device/system that can be used to verify whether the device or system is in an expected (in particular trustworthy) state. In principle, remote attestation can be carried out purely in software. However, the addition of hardware security mechanisms is common in order to ensure the integrity and authenticity of the transmitted information. This is particularly advantageous in connection with Measured Boot and a Trusted Platform Module (TPM). Starting from a "root-of-trust", each boot component calculates a cryptographic checksum of the next boot component. The checksums can then be stored in special registers, so-called Platform Configuration Registers (PCRs), e.g., in a TPM. The list of PCR values can also be signed with a non-extractable private key stored in the TPM and then forwarded together with the signature to another instance (e.g., a server) for verification. The device's access to a service, or a network in general, can thus be controlled depending on the measured boot components. Other examples of basic technologies that provide remote attestation as a partial functionality include Intel SGX, AMD SEV, and Intel TDX. A generalization of the remote attestation architecture is currently being defined in the "rats" IETF Working Group (see https://datatracker.ietf.org/grou p/rats/about/).

It is known from Ubuntu Core that the apps offered via an app store (here: snaps) can be assigned to different so-called "channels" (see https://snapcraft.io/docs/channels). In particular, a "risk level" (e.g. "stable", "candidate", "beta", "edge") is also part of a channel name. This value describes how often updates for a snap can be expected, which may result in incompatibility with previous versions. Example descriptions:
- Stable: "There is an implied promise to avoid any changes that would disrupt those usages."
- Candidate: "Releases in candidate are considered almost ready for going into stable, but need some additional real-world experimentation before they move forward."
- Beta: "Beta is the first level towards the stabilization of what was before a fast-moving stream of changes."

Thus, it is one object of the present invention to provide a possibility to assess the quality of single applications or application deployments (including a combination of applications) which may influence the functionality, or security, of a component in an automation system.

According to a first aspect, a method for a quality level determination of an application file for an automation component of an automation system is provided. The method comprises the following steps:
- determining quality metrics of the application file for the automation component of the automation system,
- evaluating the determined quality metrics based on predefined criteria, and
- determining a quality level of the application file based on the evaluation result.

The application file may be for example an application package including an application and corresponding meta data. The application file may also be an application deployment configuration file including or referencing (e.g., via application name, hash value, etc.) one or more applications and their respective configuration data and/or meta data. The application file may be installed, i.e., deployed, and executed on an automation component of an automation system. The automation system may be for example an energy, building or industrial automation system. Such an automation system may comprise one or more automation components, which may be for example a control unit (PLC), an industrial personal computer (IPC), a server component (edge component, cloud server, Scada server, etc.), or any other component or device being usable in an automation system. On an automation component, one or more applications may be installed and may be executed, wherein each of these may influence the operation and functionality of the automation component and thus of the automation system.

Thus, in order to be able to assess the overall quality and proper functionality of the automation system and/or the automation component, the herein described method provides a quality level determination of an application file for such an automation component. Thus, in a first step, quality metrics of an application file for an automation component of an automation system are determined. It should be noted that one or more quality metrics may be determined and further processed.

The term quality metric, or stability metric, may be used to rate the quality of the application file. The quality of an application file may for example define whether the application file is able to fulfill, partially fulfill or not fulfill functional or non-functional requirements of the automation component on which the application file should be executed. Such a quality can be determined/calculated in the form of metric parameters (single value, string, vector / tuple) which results in quality metrics.

Examples of quality metrics with respect to non-functional requirements may be:
- applications or application deployments with high quality only consume the resources required or requested by them (e.g. CPU, RAM). A corresponding quality metric can be determined, for example, by monitoring the computing resources consumed, e.g. as part of a system test (e.g., vector of the average resource consumption for the individual computing resources)
- applications or application deployments with low quality often have e.g., memory leaks, utilize the CPU too much, or have not been programmed and tested well, e.g., with regard to real-time capability, which can negatively affect the automation device / scenario (e.g. production throughput, production downtimes). A quality metric relating for instance to real-time capability can be determined, for example, by measuring the timing behavior of an application, e.g., as part of a system test (e.g., single value / string "Latency < 10us") or continuous monitoring of the application during runtime.

An example for a quality metric with respect to a functional requirement may be for example: applications or application deployments execute the expected function and not a faulty function (e.g., due to programming or configuration errors). A corresponding quality metric can be determined, for example, by executing functional unit tests or by executing a system test (e.g., recording as a string or Boolean that the system test was successfully completed)

It should be noted that any other kind of quality or quality metric may be determined which is able to indicate a quality, i.e., whether the application and/or application deployment, is able to fulfill any specified requirements of the automation component or automation scenario.

The quality level may be determined with respect to one or multiple fixed and/or configurable rule sets that define the predefined criteria. It may be furthermore determined which quality expectation definition rule sets are applied depending on the type of the application file (e.g., binary, bytecode), depending on the server/Appstore from which the application file has been loaded, depending on the operational state of the automation component, and/or depending on the operational state of the automation system, which may be determined, e.g., from a production management system.

Then, in a second step, the determined quality metrics are evaluated based on predefined criteria. The predefined criteria may be any kind of characteristics suitable for assessing the quality metrics. For example, the predefined criteria may be different thresholds or the like for different quality metrics. Further examples of such criteria will be explained below in further detail.

After the evaluation, the quality level of the application file is determined based on the evaluation result. The quality level can be a number (e.g., 0-3), a string (e.g., "Unknown quality level", "High quality level", "Accepted status" / "Not accepted status"), a more extensive report (e.g., JSON data structure with further information), or a binary-coded value.

The quality level may be suitable to indicate how good or bad the quality metric of an application file is. This may be an indicator whether the application of the application file may lead to errors or problems of the automation component and/or the corresponding automation system. This information may then be used for determining actions for overcoming such errors or problems. Thus, determining the quality level of the application file may improve the overall quality of the automation system.

In contrast to previous approaches, any kind of application file being loaded onto a component of an automation system may be assessed in view of its quality metric. Thus, not only system resources, or predefined channels of an app store will be assessed, but an individual check of all possible applications files which are to be deployed on an automation component may be provided by the here described method.

According to a further embodiment, the method further comprises performing further actions based on the determined quality level. Such actions may include for example issuing a warning signal to a user such as an operator of the automation component or automation system, reviewing the automation component or automation system with respect to problems caused by the application file, monitoring the automation component or automation system in further detail, e.g., checking other application files on the automation component, etc. This may improve the overall functionality of the automation component and/or automation system as the quality level of the application file may be used for deciding on further actions before the quality level has any impact on the functionality of the automation component and/or automation system.

According to a further embodiment, a further action comprises labelling the application file when the determined quality level is below a threshold quality level. When the determined quality level is below a threshold quality level, this may indicate that the application file is likely to cause problems in the future. When an error occurs, it is already known which application files may be responsible for this error (due to the previous determination of the quality level) and thus the error diagnostic may be accelerated and simplified.

Thus, the determined quality level may be used for improving the overall functionality and/or reliability of the automation component and/or the automation system, for example by being aware of potential problems being caused by the application file.

According to a further embodiment, determining the quality metrics of the application file comprises analyzing characteristics of the application file. These characteristics may be information being part of the application file and may thus be explicitly available as part of the application file, for example in the form of meta information, configuration data, or other stored information like the manufacturer / provider of the application. The characteristics may be for example in the form of a coded statement such as "System test successfully completed", "Accepted during commissioning", "Approved by OEM", "Tested as compatible with a specific application deployment", etc.

The characteristics may also be information on the application file and may be available in an implicit form. For example, the quality metrics may be determined by checking other properties/characteristics of the application file, such as behavior of the application file. Such characteristics may be for example manufacturer information (e.g., applications from a specific manufacturer may be assumed to have a high-quality level), compliance with certain (security) best practices (e.g., the use of up-to-date and patched software), runtime behavior of the application of the application file (e.g. many crashes / restarts of an application), etc. The implicitly and explicitly available characteristics may also be combined in order to obtain a better evaluation. Characteristics may also be derived from the application file by checking whether the program code of the application file includes security-oriented checks as, e.g., memory access range checks, or whether pointers to a memory location comprise a checksum allowing for pointer authentication during execution of the application file's program code, or whether the program code is "position independent", allowing for applying address space layout randomizaion (ASLR).

In principle, any information of an application file may be used to derive quality metrics and thus a statement regarding its quality level. The rules how to determine the quality metrics may be defined in component- or system-specific guidelines, which can be specified by the operator of the automation system, for example.

According to a further embodiment, determining the quality metrics of the application file comprises retrieving quality metrics stored in the application file. Instead of determining the quality metrics based on the characteristics of the application file when determining the quality level, the quality metrics may be determined beforehand and may be part of the application file. For example, the quality metrics may be supplied as part of the application file by the provider of the application file or may be determined during a test and/or commissioning and may added subsequently. This may simplify the determination of the quality level, as the determination of the quality metrics can be reduced to retrieving the already determined quality metrics. Furthermore, the quality metrics can be digitally signed together with information on the corresponding application file. This may enhance the trust in the quality metrics and may thus improve the reliability of the quality level determination.

According to a further embodiment, determining the quality metrics and/or determining the quality level is performed during a test of the application file and/or of the automation component. Such a test may be performed for example during start-up of the application file and/or of the automation component. This may provide the advantage that from the start of the application included in the application file, it is known whether the application is likely to cause any problems in the future. In such a test, the quality metrics may be determined and stored for later use or for direct use for determining the quality level. Further, in such a test, the quality level may be determined based on stored or currently determined quality metrics. The determination of the quality metrics and/or quality level may be repeated, e.g., in regular intervals or when triggered by user inputs or other events generated by the automation system.

According to a further embodiment, the method further comprises determining a quality level of the automation component by combining the quality levels of a plurality of application files and/or determining a quality level of the automation system by combining the quality levels of a plurality of automation components. By combining several quality levels (either of several application files or of several automation components), a summarized quality level of the automation device or the overall system may be determined. Thus, not only the quality level of a single application file may be determined, but also the quality level of the automation component on which the application file is deployed and/or of the automation system comprising the automation component with the application file. This information may thus be used for a comprehensive assessment of the quality level of the whole automation system.

According to a further embodiment, evaluating the determined quality metrics based on predefined criteria comprises comparing a value of the determined quality metrics with a required value of the quality metrics, wherein the required value of the quality metrics is defined in the predefined criteria. For example, the predefined criteria may comprise at least one of a minimum requirement of the automation system and a manufacturer.

When the application file is issued by a manufacturer, this manufacturer may for example be enlisted as a manufacturer to be trusted and a specific value of the quality metrics may be defined for application files from this manufacturer. When comparing the quality metrics (i.e., application file issued by this manufacturer) with the predefined criteria, the required predefined criteria may be fulfilled. The quality metrics and the predefined criteria in this case may be for example strings which can be compared.

Further, minimum requirements of the automation system may be for example requirements with respect to runtime behavior, software/firmware version, and/or security level. All of these requirements may be defined as values of a predefined criteria and may be easily compared with the determined quality metrics.

According to a further aspect, an automation component of an automation system is provided, wherein the automation component comprises at least one storage, for example a repository or any other kind of storage, memory or database, for storing an application file comprising at least one application, and a quality metric evaluation unit for performing a method for a quality level determination as described above.

The automation component may be for example a control unit (PLC), an industrial personal computer (IPC), a server component (such as an Edge device, a cloud server or a Scada server). The automation component may further comprise a runtime environment for executing the at least one application. In this case, the application file is stored on the automation component to be executed directly on the automation component and the quality metric evaluation unit may be implemented on the same automation component. Thus, a determination of the quality level of the application file may directly indicate a quality level of the automation component.

According to a further embodiment, the automation component may be a device management system. The device management system may be configured to load application files onto various automation components in the automation system. Instead of locally determining a quality level of an application file, i.e., on the component where the application file is deployed, the device management system may centrally or remotely determine the quality level of the application file using the quality metric evaluation unit being implemented on the device management system.

According to a further aspect, an automation system is provided which comprises at least a first and a second automation component as described above. The first automation component is configured to execute the at least one application and the second automation component is a device management system, wherein the quality metric evaluation unit is locally arranged on the first automation component and/or is centrally arranged on the device management system.

The respective entity, e.g., the quality metric evaluation unit, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

According to a further aspect, the invention relates to a computer program product comprising a program code for executing the above-described method for a quality level determination of an application file for an automation component of an automation system when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of an automation system with automation components; and
- Fig. 2: shows a sequence of steps of a method for a quality level determination of an application file for an automation component of the automation system of Fig. 1.

In the Figures, like reference numerals designate like or functionally equivalent elements, unless otherwise indicated.

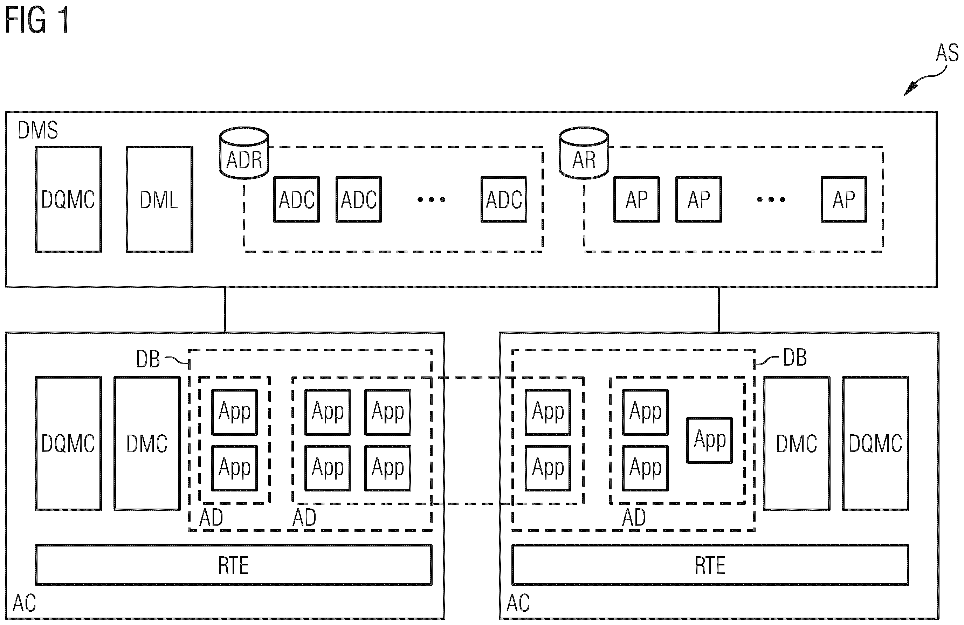

Fig. 1 shows an automation system AS, which can be for example an industrial, energy or building automation system. The automation system AS is shown with two automation components AC. However, it should be noted that the automation system AS may comprise any number of automation components AC. Such an automation component AC may be for example a controller or control unit (PLC), an industrial PC (IPC), an edge device / on-premises server, a cloud server, or any other kind of device, on which automation functions are executed in the form of applications App or application deployments AD. An application deployment AD may comprise several applications App which can also be implemented on several automation components AC as shown in Fig. 1 by the application deployment AD being part of both automation components AC.

Such an app-enabled automation component AC may have a runtime environment (RTE) - e.g., Linux, Windows, etc. for executing the applications App. The automation components AC also comprise a deployment management component DMC and a quality metric evaluation unit DMQC. The deployment management component DMC is responsible for deploying any application files (either applications or application deployments) into respective storages or databases DB of the automation component AC.

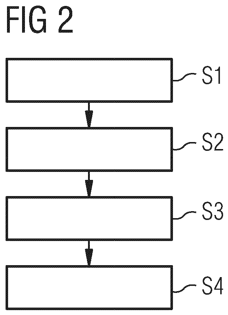

The quality metric evaluation unit DMQC is responsible for determining and evaluating a quality level of an application App or application deployment AD as will be described in further detail with reference to Fig. 2.

The automation system AS further comprises a device management system DMS. The device management system DMS is configured to manage the automation components AC of the automation system AS.

The device management system DMS may also comprise a quality metric evaluation unit DQMC, similar to the quality metric evaluation units DQMC of the automation components AC. Further, the device management system DMS comprises a device management logic DML as well as a storage, in this case a repository AR, in which application packages can be stored, and a repository ADR, in which application deployment configurations ADC can be stored. The device management logic DML is configured to load applications AP using the application packages or application deployments AD using the application deployment configurations ADC onto the automation components AC. The application deployment configurations ADC contain the necessary information, e.g., which application packages are part of the deployment, their configuration, on which nodes they are to be executed, etc.

A quality level of the applications App or application deployments AD may be determined based on quality metrics of the applications App or application deployments AD. Such a quality level may then be used for example for ensuring an overall quality of the operation of the automation components AC and/or the automation system AS.

The quality level of the applications App and/or application deployments AD may be determined locally on an automation component AC by using the quality metric evaluation unit DQMC implemented on the automation components AC or may be determined at a central location, for example using the quality metric evaluation unit DQMC of the device management system DMS.

With reference to Fig. 2, the method for a quality level determination of an application App and/or an application deployment AD of an automation component AC of the automation system AS of Fig. 1 will be explained in further detail. The method may be executed in any of the quality metrics evaluation units DQMC.

In a first step S1, quality metrics of the application App and/or the application deployment AD are determined. As already mentioned above, an application deployment AD consists of one or more applications App and their configuration and can be described by an application deployment configuration (e.g., a docker-compose.yaml file for Docker containers / Docker compose projects, also in corresponding YAML files for Kubernetes). An application App may comprise meta-data specifying inter alia features of the corresponding application. Such an application App may be provided as an application package including meta information, as a deployment configuration file.

The determined quality metrics can for example be provided in the metadata or configuration data of the applications App and/or the application deployments AD. They can also be determined at runtime.

In a further step S2, the determined quality metrics are evaluated based on predefined criteria. The quality metrics and the corresponding predefined criteria may be for example the fulfillment of certain minimum requirements for the automation system AS, information regarding structure, setup, and/or deployment of an application for a successfully completed system test, a release by a machine builder, an acceptance as part of a commissioning, etc.

In a subsequent step S3, the evaluated quality metrics, i.e., the evaluation result, can be used to determine different quality levels of the application App and/or the application deployment AD, and thus of the corresponding automation component AC or the automation system AS. Further, the determined quality level may be further evaluated, e.g., by the device management system DMS, with the help of a graphical or CLI-based tool by a user / operator based on predefined criteria (policy). Such a policy may be for example that all applications App of a certain application deployment AD must have a certain quality level.

The determined quality level of an application App and/or application deployment AD can then be used in step S4 for performing further actions. For example, sub-areas of an automation component AC or the automation system AS or of applications App of an application deployment AD or of an application deployment AD or of a combination of these can be identified and an application App or application deployment AD can be marked or labelled where problems are most likely to occur. Further, a generation of a warning message, display of certain application deployments AD (e.g., application deployments having a low quality level) in a graphical user interface, rejection of an application deployment AD (e.g., the corresponding application cannot be installed on an automation component AC or is removed), etc., can be carried out.

The basic idea of this method is to carry out the quality assessment of an application App and/or application deployment AD and to use the results to improve the overall availability and reliability of the automation system AS. A determined quality level can be used, for example, to simplify troubleshooting. For this purpose, a web-based UI can be used for example to display or query via an API which applications App or application deployments AD correspond to a certain quality level. Dependencies between the determined quality levels of several applications App or application deployments AD can also be identified. It is also conceivable that the information can be queried by applications App themselves, e.g. to restrict/enable certain functions. Furthermore, a quality level can also be used to decide whether a certain application App or application deployment AD may be brought to an automation component AC for execution. In this way, the execution of application deployments that do not correspond to a desired quality level can be rejected, or an operator can be shown whether the quality level of the overall system AS changes with loading and execution. It is also possible for data generated by an application deployment AD to be linked to its quality level. In this way, other parts of the automation system AS can determine whether received data was generated by an application deployment AD with a certain quality level and, if necessary, process it further or reject it.

Furthermore, it is possible that, depending on the determined quality level of the application App, the application App is installed on a control device, started and executed on a control device, started and executed on a control device only in (uncritical) operation modes of the control device (e.g., in maintenance mode or Stop-Mode (control function not activated), but not in operation mode in which the control function of a technical system is in operation. Furthermore, it is possible to select one of a set of application execution environments for executing this application App depending on the determined quality level of the application App. It is also possibly to apply code modification to the application file, in particular to apply application shielding to the application App which adds security checks to the program code, before installing respectively executing the application App.

Thus, using the above-described system and method, it is possible to provide a quality assessment of an application App or application deployment AD. This may improve the overall availability, reliability, and/or functionality of the automation system AS and its components AC.

Although the present invention has been described in accordance with preferred embodiments, it is obvious for the person skilled in the art that modifications are possible in all embodiments.

### List of Reference

- AC: automation component
- AD: application deployment
- ADR, AR, DB: storage (repository, database)
- App: application
- AS: automation system
- DMC: deployment management component
- DML: device management logic
- DMS: device management system
- DQMC: quality metric evaluation unit
- RTE: runtime environment
- S1-S4: method steps

## Claims

1. A method for a quality level determination of an application file (App, AD) for an automation component (AC, DMS) of an automation system (AS), the method comprising:
- determining (S1) quality metrics of the application file (App, AD) for the automation component (AC, DMS) of the automation system (AS),
- evaluating (S2) the determined quality metrics based on predefined criteria, and
- determining (S3) a quality level of the application file (App, AD) based on the evaluation result.

2. The method according to claim 1, further comprising performing (S4) further actions based on the determined quality level.

3. The method according to claim 2, wherein a further action comprises labelling the application file (App, AD) when the determined quality level is below a threshold quality level.

4. The method according to any one of the preceding claims, wherein the application file (App, AD) is an application package including an application (App) and corresponding meta data or wherein the application file (App, AD) is an application deployment configuration file including one or more applications (App) and their respective configuration data and/or meta data.

5. The method according to any one of the preceding claims, wherein determining the quality metrics of the application file (App, AD) comprises analyzing characteristics of the application file (App, AD).

6. The method according to any one of the preceding claims, wherein determining the quality metrics of the application file (App, AD) comprises retrieving quality metrics stored in the application file (App, AD).

7. The method according to any one of the preceding claims, wherein determining the quality metrics and/or determining the quality level is performed during a test of the application file (App, AD) and/or of the automation component (AC, DMS).

8. The method according to claim 7, wherein the test is performed during start-up of the application file (App, AD) and/or of the automation component (AC, DMS).

9. The method according to any one of the preceding claims, further comprising determining a quality level of the automation component (AC, DMS) by combining the quality levels of a plurality of application files (App, AD) and/or determining a quality level of the automation system (AS) by combining the quality levels of a plurality of automation components (AC, DMS).

10. The method according to any one of the preceding claims, wherein evaluating the determined quality metrics based on predefined criteria comprises comparing a value of the determined quality metrics with a required value of the quality metrics, wherein the required value of the quality metrics is defined in the predefined criteria.

11. The method according to any one of the preceding claims, wherein the predefined criteria comprise at least one of a minimum requirement of the automation system (AS) and a manufacturer.

12. An automation component (AC, DMS) of an automation system (AS), the automation component (AC, DMS) comprising
- at least one storage (ADR, AR, DB) for storing an application file (App, AD) comprising at least one application, and
- a quality metric evaluation unit (DMQC) for performing a method for a quality level determination according to any one of the preceding claims.

13. The automation component according to claim 12, wherein the automation component (AC) further comprises a runtime environment (RTE) for executing the at least one application.

14. The automation component according to claim 12, wherein the automation component (DMS) is a device management system.

15. An automation system (AS) comprising at least a first and a second automation component (AC, DMS) according to any one of the claims 12 to 14, wherein the first automation component (AC) is configured to execute the at least one application and wherein the second automation component is a device management system (DMS), wherein the quality metric evaluation unit is locally arranged on the first automation component (AC) and/or is centrally arranged on the device management system (DMS).
